(19) Europäisches Patentamt
European Patent Office
Office européen des brevets

(11) Veröffentlichungsnummer: **0 534 212 B1**

(12) **EUROPÄISCHE PATENTSCHRIFT**

(45) Veröffentlichungstag der Patentschrift: **06.12.95**

(51) Int. Cl.[6]: **C08L 25/00**, C08L 33/06, C08L 35/06, //(C08L25/00,51:00, 51:00),(C08L33/06,51:00,51:00)

(21) Anmeldenummer: **92115221.1**

(22) Anmeldetag: **05.09.92**

# (54) Teilchenförmiges Pfropfcopolymerisat mit Kern/Schale-Aufbau.

(30) Priorität: **24.09.91 DE 4131728**

(43) Veröffentlichungstag der Anmeldung:
**31.03.93 Patentblatt 93/13**

(45) Bekanntmachung des Hinweises auf die Patenterteilung:
**06.12.95 Patentblatt 95/49**

(84) Benannte Vertragsstaaten:
**BE DE ES FR GB IT NL**

(56) Entgegenhaltungen:
**EP-A- 0 006 503**
**EP-A- 0 074 046**
**EP-A- 0 450 485**
**DE-A- 2 324 316**

(73) Patentinhaber: **BASF Aktiengesellschaft**
**Carl-Bosch-Strasse 38**
**D-67063 Ludwigshafen (DE)**

(72) Erfinder: **Niessner, Norbert, Dr.**
**Buhl'scher Hof 10**
**W-6701 Friedelsheim (DE)**
Erfinder: **Seitz, Friedrich, Dr.**
**Von-Wieser-Strasse 1**
**W-6701 Friedelsheim (DE)**

**EP 0 534 212 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Mehrstufig aufgebaute Pfropfcopolymerisate (Kern/Schale, "core/shell") sind bekannt. Sie finden u.a. Verwendung als Schlagzähmodifier, z.B. für PVC, PMMA, wobei im allgemeinen die Pfropfcopolymerisate in einem kontinuierlichen thermoplastischen Polymeren dispergiert sind.

Vorteilhafterweise handelt es sich bei den beschriebenen Pfropfcopolymerisaten mit Kern/Schale-Aufbau um 3- oder mehrstufige Polymerisate, bestehend aus einem "harten" Kern, einer "weichen" 1. Hülle (oder vice versa) und einer oder mehreren Hüllen, wobei die äußerste Hülle im allgemeinen eine "harte" Hülle ist, welche die (Teil-)Verträglichkeit zu einer thermoplastischen Matrix herstellen soll.

Die Begriffe "hart" und "weich" beziehen sich auf die Lage der Glastemperatur (hart = oberhalb Raumtemperatur und weich = unterhalb Raumtemperatur) der entsprechenden Polymeren und sind allgemein bekannt.

Der Kern/Schale-Aufbau, insbesondere im Falle der PVC- und PMMA-Modifier dient primär dazu, den Unterschied des Brechungsindex zwischen dispergierter Kautschukphase und kontinuierlicher thermoplastischer Hartmatrix - zumindest teilweise - anzugleichen. Daraus resultieren schlagzähe und transparente thermoplastische Werkstoffe.

Von den genannten Pfropfcopolymerisaten zeichnen sich diejenigen ohne ungesättigte Anteile durch eine besondere Witterungsstabilität aus. Dabei handelt es sich insbesondere um Acrylatkautschuke. Vernetzend und/oder pfropfaktiv wirkende Monomere sorgen einerseits für ein kautschukelastisches Verhalten dieser Acrylatkautschuke und ermöglichen andererseits eine Anbindung weiterer Hüllen an die Kautschuk-Grundlage. Beispielsweise seien hier genannt:
EP 297 706, EP 269 324, EP 263 633, EP 254 418, EP 270 865, EP 210 450, DE 34 36 815, DE 34 14 118, EP 147 728, EP 143 991, EP 136 552, DE 33 00 526, FR 25 28 436, EP 81 761, US 4 387 138, US 4 341 883, US 4 180 529, US 4 141 935, US 4 082 895, FR 23 24 660, J 52 023 150, US 3 971 835, DE 22 44 519, BE 783 190, DE 21 62 485, BE 770 035, DE 21 07 350.

Eine ausführliche Diskussion optisch transparenter polymerer Mehrphasensysteme findet sich bei H.J.Biangardi, H. Sturm, G. Kostersitz in Angew. Makromol. Chem. 183, 221-241 (1990).

Um ein vorgegebenes Kautschukvolumen - ohne die effektive Kautschukmenge - zu erhöhen, müssen Anteile einer Hartkomponente in das Kautschukteilchen eingeschlossen werden. Dieses Konzept liegt u.a. der Entwicklung des schlagzähmodifizierten Polystyrols (high impact polystyrene) oder der ABS-Polymeren zugrunde (z.B. beschrieben in: "Rubber Toughened Plastics", Advances in Chemistry Series 222, S. 2 (1989)). Das bedeutet, daß im Falle eines Emulsionspolymerisats ein harter Kern von einer weichen 1. Hülle umschlossen sein muß, die dann eine weitere, mit der kontinuierlichen Matrix verträgliche 2. Hülle besitzt.

In DE 21 07 350 und in BE 783 190 sind beispielsweise mehrschichtig aufgebaute Emulsionscopolymerisate mit hart-weich-hart-Morphologie beschrieben. Der Aufbau der äußeren, harten Schale erfolgt jedoch nicht kontrolliert in einer Emulsions- sondern in einer Suspensionspolymerisation. Diese Teilchen zeigen eine gute Schlagzähmodifizierung.

In BE 770 035, DE 22 44 519 und US 3 971 835 werden Systeme aus einem harten Styrol-Kern, einer 1. Hülle aus Butylacrylat-Kautschuk und einer 2. Hülle aus MMA zur Schlagzähmodifizierung von PVC beschrieben.

In JA 52 023 150 wird ein System aus einem Vinylmonomer-Kern, einer 1. Hülle aus einem vernetztem Alkylacrylat und einer 2. Hülle aus - beispielsweise - einer Mischung aus Styrol und Acrylnitril zur Schlagzähmodifizierung von PVC beschrieben.

In FR 23 24 660 wird ein System aus

a) einem unvernetztem Polystyrol-co-MMA-Kern und

b) einer unvernetzten kautschukartigen Hülle aus Alkylacrylat + Styrol/Acrylnitril beschrieben,

als Verarbeitungshilfsmittel für PVC Formmassen.

In US 4 082 895 sind Pfropfcopolymere aus einem Acrylnitril-Copolymeren als Kern, einer 1. Hülle aus vernetztem Acrylat-Kautschuk und einer äußeren Hülle aus beispielsweise Styrol/Acrylnitril beschrieben. Nachteilig ist hier die bei hohen Acrylnitril-Gehalten zu beobachtende Vergilbung.

DE 23 24 316 beschreibt einen mehrschalig aufgebauten Acrylatkautschuk, aufgebaut aus einem harten, vernetzten Kern, einer 1. Hülle aus Acrylat und einer 2. Hülle aus beispielsweise einem Styrol-Acrylnitril-Copolymeren.

PMMA-Modifier aus einem harten Kern, einer elastomeren 1. Hülle und einer 2. Hülle aus mindestens 80 % MMA werden in DE 33 00 526 beschrieben.

In JA 60 063 248, JA 60 069 154 und JA 60 147 460 werden Pfropfcopolymere beschrieben mit einem harten Kern aus z.B. Polystyrol, einer 1. Hülle aus z.B. Butylacrylat und einer äußeren Hülle aus z.B. einem Styrol-Copolymeren.

Diese Pfropfcopolymerisate haben eine ausgezeichnete Witterungsstabilität und weisen im allgemeinen eine gute Transparenz auf; sie besitzen jedoch nur eine befriedigende schlagzähmodifizierende Wirkung. Außerdem zeigen sie eine Abhängigkeit der Zähigkeit von der Verarbeitungstemperatur (Spritzgußtemperatur), eine für den Kunststoff-Verarbeiter unerwünschte Eigenschaft.

Formmassen mit verbesserter Schlagzähigkeit bei gleichbleibend guter Einfärbbarkeit durch Zumischen einer großteiligen zu einer kleinteiligen Kautschukkomponente (bimodale Kautschukteilchen) sind in DE 28 26 925 beschrieben. Oftmals reicht die dort erzielte Schlagzähigkeit der Formmassen für hohe Beanspruchungen nicht aus. Zudem kann die Schlagzähigkeit nicht durch beliebige Zugabe der großteiligen Kautschukmenge erhöht werden, da sonst die Einfärbbarkeit deutlich verschlechtert wird.

Es bestand daher die Notwendigkeit, Pfropfcopolymerisate zu erhalten, die neben hervorragender Witterungsstabilität eine sehr hohe Zähigkeit bei sehr guter Einfärbbarkeit aufweisen, sowie eine Unabhängigkeit der Zähigkeit von der Verarbeitungstemperatur.

Es wurde nun gefunden, daß besonders hohe Kerbschlagzähigkeitswerte, verbunden mit einer Unabhängigkeit der Zähigkeit von der Verarbeitungstemperatur und einer verbesserten Einfärbbarkeit dann gefunden werden, wenn ein Pfropfcopolymerisat A) verwandt wird, das als Kern eine vernetzte Hartphase aus vinylaromatischem (Co)polymer, als 1. Hülle eine vernetzte Kautschukphase auf Basis eines Alkylacrylats, optional eine zweite Hülle aus vinylaromatischen (Co)polymeren und als äußere Hülle eine Hartphase aus einem Copolymerisat aus vinylaromatischen Monomer und einem weiteren copolymerisierbaren Monomeren besitzt, in Verbindung mit einem Pfropfcopolymerisat B), wobei sich die beiden Pfropfcopolymerisate in ihrer Teilchengröße deutlich unterscheiden müssen. Überraschenderweise weisen die erfindungsgemäßen Formmassen eine hohe Bindenahtfestigkeit auf, verbunden mit verbesserter Entformbarkeit.

Unmittelbarer Erfindungsgegenstand ist eine Mischung aus

A: einem teilchenförmigen Pfropfcopolymerisat A, das gebildet wird aus - in der Reihenfolge A1 bis A3 von innen nach außen - einem Kern und mehreren Schalen, nämlich

A1: 90 bis 5 (bevorzugt 85 bis 5 und insbesondere 70 bis 15) Gew.-% (bezogen auf A1 + A2-1 + A2-2) eines Kerns mit einer Glasübergangstemperatur $T_g$ oberhalb von 25 °C, aus:

A11: 50 bis 99,9 (60 bis 99,8; 80 bis 99,5 Gew.-% mindestens eines vinylaromatischen Monomeren A11;

A12: 0,1 bis 10 (0,2 bis 5; 0,5 bis 3) Gew.-% mindestens eines polyfunktionellen, vernetzend wirkenden Monomeren und/oder eines pfropfaktiven Monomeren mit zwei- oder mehrfunktionellen Gruppen unterschiedlicher Reaktivität, wobei vernetzende und pfropfaktive Wirkung auf ein einziges Monomer zutreffen können (A12);

A13: bis 49,9 (39,8; 19,5) Gew.-% eines oder mehrerer copolymerisierbarer Monomerer A13;

A2-1:5 bis 90 (10 bis 80; 15 bis 70) Gew.-% (bezogen auf A1 + A2-1 + A2-2) einer ersten Hülle A2-1 aus einem kautschukartigen Copolymeren A2-1 mit einer Glasübergangstemperatur $T_g$ von unter 25 °C, aus:

A21-1: 50 bis 99,9 (60 bis 99,8; 80 bis 99,5) Gew.-% mindestens eines Alkylacrylates A21-1 mit 1 bis 18 C-Atomen im Alkylrest;

A22-1: 0,1 bis 10 (0,2 bis 5; 0,5 bis 3) Gew.-% mindestens eines polyfunktionellen, vernetzend wirkenden Monomeren und/oder mindestens eines pfropfaktiven Monomeren mit zwei oder mehr funktionellen Gruppen unterschiedlicher Reaktivität, wobei vernetzende und pfropfaktive Wirkung auf ein einziges Monomer zutreffen können (A22-1);

A23-1: bis 49,9 (39,8; 19,5) Gew.-% eines oder mehrerer copolymerisierbarer Monomerer A23-1;

A2-2:5 bis 90 (5 bis 85; 15 bis 70) Gew.-% (bezogen auf A1 + A2-1 + A2-2) einer zweiten Hülle mit einer Glasübergangstemperatur $T_g$ oberhalb von 25 °C aus einem kautschukartigen Copolymeren A2-2 aus

A21-2: 1 bis 99 (2 bis 98; 10 bis 90) Gew.-% eines oder mehrerer vinylaromatischer Monomerer A21-2;

A22-2: 1 bis 99 (2 bis 98; 10 bis 90) Gew.-% eines oder mehrerer copolymerisierbarer Monomerer A22-2;

A23-2: bis 10 (5; 3) Gew.-% mindestens eines polyfunktionellen, vernetzend wirkenden Monomeren und/oder mindestens eines pfropfaktiven Monomeren A23-2 mit zwei oder mehr funktionellen Gruppen unterschiedlicher Reaktivität, wobei vernetzende und pfropfaktive Wirkung auf ein einziges Monomer zutreffen können,

wobei der mittlere Teilchendurchmesser ($d_{50}$-Wert) des Pfropfcopolymerisats A 50 bis 200 (60 bis 180; 80 bis 150) nm beträgt;

und

B: einem zweiten Rfropfcopolymerisat B aus

B1: 40 bis 90 (50 bis 80; 55 bis 75) Gew.-% eines kautschukartigen Materials B1 einer Glasübergangstemperatur $T_g$ von unter 25 ° C, bestehend aus:

B11: 50 bis 99,9 (60 bis 99,8; 80 bis 99,5) Gew.-% mindestens eines Alkylacrylates B11 mit 1 bis 18 C-Atomen im Alkylrest;

B12: 0,1 bis 10 ((0,2 bis 5; 0,5 bis 3) Gew.-% mindestens eines polyfunktionellen, vernetzend wirkenden Monomeren und/oder mindestens eines pfropfaktiven Monomeren mit zwei oder mehr funktionellen Gruppen unterschiedlicher Reaktivität, wobei vernetzende und pfropfaktive Wirkung auf ein einziges Monomer zutreffen können (B12);

B13: bis 40 (39,8; 19,5) Gew.-% eines oder mehrerer copolymerisierbarer ungesättigter Monomerer B13;

B2: 10 bis 50 (20 bis 50; 25 bis 45) Gew.-% einer oder mehrerer Hüllen B2 aus

B21: 60 bis 90 (65 bis 80; 70 bis 75) Gew.-% eines oder mehrerer vinylaromatischer Monomerer B21;

B22: 10 bis 40 (20 bis 35; 25 bis 30) Gew.-% (Meth)acrylnitril B22;

B23: 0 bis 30 (2 = ; 10) Gew.-% eines oder mehrerer copolymerisierbarer, ungesättigter Monomerer B23,

wobei der mittlere Teilchendurchmesser ($d_{50}$-Wert) des Pfropfcopolymerisates B 300 bis 1500 (350 bis 1000; 380 bis 800) nm beträgt;

C: einer Hartkomponente C aus einem oder mehreren Copolymerisaten von

C1: 50 bis 100 (60 bis 90; 65 bis 81) Gew.-% Styrol, α-Methylstyrol, kernsubstituiertem Styrol, Alkyl(meth)acrylat mit 1 bis 18 C-Atomen im Alkylrest oder Mischungen daraus (C1);

C2: bis zu 50 (10 bis 40; 19 bis 35) Gew.-% (Meth)acrylnitril, Maleinsäureanhydrid, N-substituierte Maleinimide oder Mischungen daraus (C2);

D: bis zu 90 Gew.-%, bezogen auf die Summe von A bis D, mindestens eines Polycarbonats D,

E: bis zu 50 Gew.-%, bezogen auf die Summe von A bis E, übliche Zusatzstoffe.

Die vorstehend in Klammern angegebenen Werte sind bevorzugt bzw. besonders bevorzugt.

Nach einer anderen Ausführungsform gelten für die Komponente A die folgenden Mengenverhältnisse:

A1: 85 bis 5, bevorzugt 70 bis 10, besonders bevorzugt 55 bis 15 Gew.-% (bezogen auf A1 bis A3)

A11: 50 bis 99,9, bevorzugt 60 bis 99,8, besonders bevorzugt 80 bis 99,5 Gew.-%

A12: 0,1 bis 10, bevorzugt 0,2 bis 5, besonders bevorzugt 0,5 bis 3 Gew.-%

A13: 0 bis 49,9, bevorzugt 0 bis 39,8,besonders bevorzugt 0 bis 19,5 Gew.-%

A2-1: 5 bis 85, bevorzugt 10 bis 70, besonders bevorzugt 15 bis 55 Gew.-% (bezogen auf A1 bis A3)

A21-1: 50 bis 99,9, bevorzugt 60 bis 99,8, besonders bevorzugt 80 bis 99,5 Gew.-%

A22-1: 0,1 bis 10, bevorzugt 0,2 bis 5, besonders bevorzugt 0,5 bis 3 Gew.-%

A23-1: 0 bis 40, bevorzugt 0 bis 39,8, besonders bevorzugt 0 bis 19,5 Gew.-%

A2-2: 5 bis 85, bevorzugt 10 bis 70, besonders bevorzugt 15 bis 55 Gew.-% (bezogen auf A1 bis A3)

A21-2: 50 bis 100, bevorzugt 60 bis 90, besonders bevorzugt 65 bis 81 Gew.-%

A22-2: 0 bis 10, bevorzugt 0 bis 5, besonders bevorzugt 0 bis 3 Gew.-%

A23-2: 0 bis 50, bevorzugt 10 bis 40, besonders bevorzugt 19 bis 35 Gew.-%

A3: 5 bis 85, bevorzugt 10 bis 70, besonders bevorzugt 15 bis 55 Gew.-% (bezogen auf A1 bis A3)

A31: 1 bis 99, bevorzugt 2 bis 98, besonders bevorzugt 10 bis 90 Gew.-%

A32: 1 bis 99, bevorzugt 2 bis 98, besonders bevorzugt 10 bis 90 Gew.-%.

Komponente A (Pfropfcopolymerisat)

Pfropfgrundlage A1

Die teilchenförmigen Pfropfcopolymerisate mit Kern/Schale Aufbau werden zunächst in an sich bekannter Weise aus einer Pfropfgrundlage A1 sowie aus darauf nacheinander aufgepfropften Hüllen A2-1, A2-2 und gegebenenfalls A3 hergestellt. Die Herstellung der Pfropfgrundlage erfolgt in wäßriger Emulsion bei 20 bis 100 ° C, bevorzugt zwischen 40 und 80 ° C. Hierbei werden vinylaromatische(s) Monomere(s) A11, sowie ein vernetzend wirkendes, polyfunktionelles Monomer und/oder ein pfropfaktives Monomer, gegebenenfalls zusammen mit weiteren ethylenisch ungesättigten copolymerisierbaren Monomeren polymerisiert. Vernetzende und pfropfaktive Eigenschaften können auf ein einziges Monomer zutreffen.

Beispiele für vinylaromatische Monomere sind Styrol, α-Methylstyrol und kernalkylierte Styrole wie p-Methylstyrol und tert.-Butylstyrol. Besonders bevorzugt werden Styrol, α-Methylstyrol und p-Methylstyrol allein oder in Mischung eingesetzt. Beispiele für weitere copolymerisierbare ethylenisch ungesättigte Monomere sind Acrylnitril, Acrylsäure, Maleinsäureanhydrid, Acrylamid, N-substituierte Acrylamide, Vinylmethylether allein oder in Mischung.

Zur Erzielung guter mechanischer Eigenschaften hat es sich als notwendig erwiesen, daß das als Pfropfgrundlage verwendete Polymerisat sowohl vernetzt ist als auch pfropfaktive Stellen für die anschließende Pfropfung vorhanden sind. Hierzu wird die Polymerisation in Gegenwart von 0,1 bis 10 Gew.-%, vorzugsweise von 1 bis 4 Gew.-%, bezogen auf das Gesamtgewicht der bei der Herstellung der Pfropfgrundlage verwendeten Monomeren A2 durchgeführt. Insbesondere wirken die eingesetzten Vernetzer gleichzeitig als pfropfaktive Monomere, alternativ können pfropfaktive Monomere in Mengen von 0,1 bis 10 Gew.-% zusätzlich zu den vernetzend und ggf. pfropfaktiv wirkenden Monomeren hinzugegeben werden. Als Vernetzer wirken u.a. Divinylbenzol, Diallylmaleat, Diallylfumarat, Diallylphthalat, Triallylcyanurat oder Triallylisocyanurat. Als pfropfaktive Monomere wirken ungesättigte Monomere, die Epoxy-, Hydroxy-, Carboxyl-, Amino- oder Säureanhydridgruppe tragen, z.B. Hydroxyalkyl(meth)acrylate.

Als besonders günstiger Vernetzer und pfropfaktives Monomer hat sich der Acrylsäureester des Tricyclodecenylalkohols (= Dicyclopentadienylacrylat) erwiesen (vgl. DE 12 60 135).

Die Glasübergangstemperatur der Pfropfgrundlage A1) liegt oberhalb von 25 °C (Die Glasübergangstemperatur wird z.B. mit Hilfe der DSC ermittelt; K.H. Illers; Makromol. Chem. 127, 1 (1969)).

Für die Herstellung der Pfropfgrundlage A1 in wäßriger Emulsion können die üblichen Emulgatoren wie die Alkalisalze von Alkyl- oder Alkylarylsulfonsäuren, Alkylsulfate, Fettalkoholsulfonate, Salze höherer Fettsäuren mit 10 bis 30 C-Atomen, Sulfosuccinate (z.B. "Aerosol OT"), Ethersulfonate (z.B. "Disponol FES 61") oder Harzseifen verwendet werden. Die genannten Verbindungen gehören zu den anionischen Tensiden. Vorzugsweise werden Natriumsalze von Alkylsulfonaten oder von Fettsäuren mit 10 bis 18 C-Atomen verwendet. Bevorzugt werden Emulgatoren in Mengen von 0,3 bis 5 Gew.-% bezogen auf das Gesamtgewicht der für die Herstellung der Pfropfgrundlage A1 verwendeten Monomeren eingesetzt. In besonders bevorzugter Weise wird eine Kombination aus einem oder mehreren anionischen Tensiden und einem oder mehreren nichtionischen Tensiden verwendet, wobei die Summe nichtionischer und anionischer Tenside im Verhältnis zu den eingesetzten Monomeren 0,3 bis 5 Gew.-% betragen soll. Nichtionische Tenside sind beispielsweise die Alkylpolyglycolether ("Lutensole"), die Alkylphenolpolyglycolether, Aminoxide (z.B. Lauryldimethylaminoxid) oder Tenside mit Zuckerresten, wie beispielsweise Sorbitanester ("Span-Typen"). Auch zwitterionische Tenside, wie z.B. die Phosphatidylcholine (z.B. Lecithin) oder Betaine können verwendet werden.

Als Polymerisationsinitiatoren dienen insbesondere die gebräuchlichen Persulfate; es sind jedoch auch Redoxsysteme geeignet. Die Menge an Initiatoren (z.B. 0,1 bis 1 Gew.-%) richtet sich in bekannter Weise nach dem gewünschten Molekulargewicht. Besonders bevorzugt werden Kalium-, Natrium- oder Ammoniumpersulfat eingesetzt.

Als Polymerisationshilfsstoffe können die üblichen Puffersubstanzen wie Natriumhydrogencarbonat, Natriumpyrophosphat (mit denen pH-Werte zwischen 6 und 9 eingestellt werden können), sowie Molekulargewichtsregler, wie z.B. Mercaptane, Terpinole oder dimeres $\alpha$-Methylstyrol, verwendet werden.

Die genauen Polymerisationsbedingungen, insbesondere Art, Dosierung und Menge des Emulgators werden innerhalb der oben angegebenen Bereiche im einzelnen so bestimmt, daß der erhaltene Latex des vernetzten Polymeren einen d(50)-Wert im Bereich von etwa 30 bis 1000 nm, bevorzugt im Bereich von 50 bis 800 nm besitzt.

Prinzipiell ist es auch möglich, die Pfropfgrundlage nach einem anderen Verfahren als dem der Emulsionspolymerisation herzustellen, z.B. durch Masse- oder Lösungspolymerisation, und die erhaltenen Polymerisate nachträglich zu emulgieren. Die Verfahren hierfür sind bekannt.

Pfropfhülle A2-1

Zur Pfropfung einer 1. Hülle A2-1 auf die Pfropfgrundlage A1 wird mindestens ein Alkylacrylat A21-1 mit 1 bis 18 C-Atomen im Alkylrest ggf. mit weiteren copolymerisierbaren Monomeren A23-1 in Gegenwart von vernetzend wirkenden und/oder pfropfaktiven Monomeren A22-1 polymerisiert.

Als Monomere A21-1 kommen Acrylsäurealkylester mit 1 bis 18 C-Atomen, insbesondere solche mit 2 bis 8 C-Atomen im Alkylrest allein in Mischung in Frage. Insbesondere sind Acrylsäure-n-butylester und Acrylsäureethylhexylester geeignet.

Das unter A1 für die vernetzenden und pfropfaktiven Monomeren Gesagte gilt auch für A2-1 und bzw. oder A2-2.

Es ist vorteilhaft, die Pfropfcopolymerisation auf das als Pfropfgrundlage dienende Polymerisat A1 wiederum in wäßriger Emulsion durchzuführen. Sie kann im gleichen System wie die Polymerisation der Pfropfgrundlage vorgenommen werden, wobei weiterer Emulgator und Initiator zugegeben werden kann. Diese müssen mit den zur Herstellung von A1 verwendeten Emulgatoren bzw. Initiatoren nicht identisch

sein. Emulgator, Initiator und Polymerisationshilfsstoffe können jeweils allein oder in Mischung zur Emulsion der Pfropfgrundlage A1 vorgelegt werden. Sie können aber auch allein oder in Mischung zusammen mit den für die 1. Hülle A2-1 verwendeten Monomer(en) zugegeben werden. Es kann zum Beispiel der Initiator und als Polymerisationshilfsmittel eine Puffersubstanz zur Emulsion der Pfropfgrundlage A1 vorgelegt werden, und anschließend die Monomere für die Hülle A2-1 gemeinsam mit dem Emulgator zugetropft werden. Es kann jede mögliche Kombination von Vorlage und Zulauf einerseits und Initiator, Emulgator und Polymerisationshilfsmittel andererseits in Frage kommen. Die bevorzugten Ausführungsformen sind dem Fachmann bekannt, z.B. aus: "Houben Weyl: Polymere I, S. 219 ff." Im übrigen gilt für die Wahl von Emulgator, Initiator und Polymerisationshilfsstoffen das bei der Herstellung der Pfropfgrundlage A1 Gesagte.

Pfropfhülle A2-2

Als vinylaromatische Monomere, als polyfunktionelle vernetzend wirkende Monomere, als pfropfaktive Monomere und als weitere ethylenisch ungesättigte copolymerisierbare Monomere finden die unter Pfropfhülle A1 beschriebenen Verbindungen Verwendung.

Es ist vorteilhaft, die Pfropfcopolymerisation auf das als Pfropfgrundlage dienende Polymerisat A1 + A2 wiederum in wäßriger Emulsion durchzuführen. Sie kann im gleichen System wie die Polymerisation der Pfropfgrundlage vorgenommen werden, wobei weiterer Emulgator und Initiator zugegeben werden kann. Diese müssen mit den zur Herstellung von A1 und/oder A2-1 verwendeten Emulgatoren bzw. Initiatoren nicht identisch sein. Im übrigen gilt für die Wahl und Kombination von Emulgator, Initiator und Polymerisationshilfsstoffen das bei der Herstellung der Pfropfgrundlage A1 und der 1. Hülle A2-1 Gesagte.

Pfropfhülle A3

Als vinylaromatische Monomere und als weitere ethylenisch ungesättigte copolymerisierbare Monomere finden die unter Pfropfhülle A1 beschriebenen Verbindungen Verwendung, wobei hier unter dem Begriff "weitere ethylenisch ungesättigte copolymerisierbare Monomere" auch pfropfaktiv und/oder vernetzend wirkende Monomere zu verstehen sind.

Es ist vorteilhaft, die Pfropfcopolymerisation auf das als Pfropfgrundlage dienende Polymerisat A1 + A2-1 (+ A2-2) wiederum in wäßriger Emulsion durchzuführen. Sie kann im gleichen System wie die Polymerisation der Pfropfgrundlage vorgenommen werden, wobei weiterer Emulgator und Initiator zugegeben werden kann. Diese müssen mit den zur Herstellung von A1 und/oder A2-1 und/oder A2-2 verwendeten Emulgatoren bzw. Initiatoren nicht identisch sein. Im übrigen gilt für die Wahl und Kombination von Emulgator, Initiator und Polymerisationshilfsstoffen das bei der Herstellung der Pfropfgrundlage A1 und 1. Hülle A2-2 Gesagte.

Komponente B (zweites Pfropfcopolymerisat)

Die Herstellung der zweiten Pfropfcopolymerisat-Komponente B erfolgt nach den an sich bekannten Methoden, z.B. beschrieben in EP 6505. Als Pfropfgrundlage B1 dient ein vernetztes Alkylacrylat mit 1 bis 18 C-Atomen im Alkylrest, ggf. mit weiteren copolymerisierbaren Monomeren in Gegenwart von vernetzend und/oder pfropfaktiv wirkenden Monomeren.

Als Monomere B11 kommen Acrylsäurealkylester mit 1 bis 18 C-Atomen, insbesondere solche mit 2 bis 8 C-Atomen im Alkylrest allein oder in Mischung miteinander in Frage. Insbesonders geeignet sind Acrylsäure-n-butylester und Acrylsäureethylhexylester.

Das unter A1 für die vernetzenden und pfropfaktiven Monomeren Gesagte gilt auch für B1.

So ist es vorteilhaft, die Pfropfcopolymerisation wiederum in wäßriger Emulsion durchzuführen. Sie kann im gleichen System wie die Polymerisation der Pfropfgrundlage A1 vorgenommen werden, wobei weiterer Emulgator und Initiator zugegeben werden können. Diese müssen mit den zur Herstellung von A1 verwendeten Emulgatoren bzw. Initiatoren nicht identisch sein. Emulgator, Initiator und Polymerisationshilfsstoffe können jeweils allein oder in Mischung vorgelegt werden. Sie können aber auch allein oder in Mischung zusammen mit den für die Pfropfgrundlage B1 verwendeten Monomer(en) zugegeben werden. Es kann zum Beispiel der Initiator und als Polymerisationshilfsmittel eine Puffersubstanz vorgelegt werden, und anschließend die Monomere für die Propfgrundlage B1 gemeinsam mit dem Emulgator zugetropft werden. Es kann jede mögliche Kombination von Vorlage und Zulauf einerseits und Initiator, Emulgator und Polymerisationshilfsmittel andererseits in Frage kommen. Die bevorzugten Ausführungsformen sind dem Fachmann bekannt, z.B. aus: "Houben Weyl; Polymere I, S. 219 ff.)". Im übrigen gilt für die Wahl von Emulgator, Initiator und Polymerisationshilfsstoffen das bei der Herstellung der Pfropfgrundlage A1 Gesagte.

Die Herstellung der Pfropfhülle kann beispielsweise nach der in DE-PS 12 60 135 beschriebenen, 1-stufigen Pfropfung geschehen, oder beispielsweise nach der in DE 32 27 555 beschriebenen mehrstufigen Pfropfung.

Bei der einstufigen Pfropfung wird zunächst in Gegenwart des wäßrigen Latex der Pfropfgrundlage B1 ein Monomerengemisch aus einem vinylaromatischen Monomeren, insbesondere Styrol, und (Meth)-acrylnitril, insbesondere Acrylnitril, polymerisiert, wobei das Verhältnis von Styrol zu Acrylnitril im Bereich von 90:10 bis 60:40, vorzugsweise im Bereich von 80:20 bis 65:35, insbesondere zwischen 76:24 und 70:30, liegen soll. Es ist vorteilhaft, diese Pfropfcopolymerisation von Styrol und Acrylnitril auf das als Pfropfgrundlage dienende vernetzte Polyacrylat wieder in wäßriger Emulsion unter den üblichen, unter A1 aufgeführten Bedingungen durchzuführen. Es wird kein Vernetzer und/oder pfropfaktives Monomeres eingesetzt.

Die Pfropfcopolymerisation kann zweckmäßigerweise im gleichen System erfolgen wie die Emulsionspolymerisation zur Herstellung der Pfropfgrundlage B1, wobei, falls notwendig, weiterer Emulgator und Initiator zugegeben werden kann. Das aufzupfropfende Monomerengemisch aus Styrol und Acrylnitril kann dem Reaktionsgemisch auf einmal, absatzweise in mehreren Stufen oder vorzugsweise kontinuierlich während der Polymerisation zugegeben werden. Die Pfropfcopolymerisation wird so geführt, daß ein Pfropfgrad von 10 bis 50 Gew.-%, vorzugsweise von 25 bis 45 Gew.-%, besonders bevorzugt von 30 bis 40 Gew.-% im Pfropfcopolymerisat B resultiert. Da die Pfropfausbeute bei der Pfropfcopolymerisation nicht immer 100 %ig ist, muß oftmals eine etwas größere Menge des Monomeren-Gemisches aus Styrol und Acrylnitril eingesetzt werden. Die Steuerung der Pfropfausbeute und somit des Pfropfgrades ist dem Fachmann bekannt und kann beispielsweise durch die Dosiergeschwindigkeit der Monomeren oder durch Reglerzugabe erfolgen (z.B. beschrieben in: Chauvel, Daniel; ACS Polymer Preprints 15, 329 (1974)).

Bei der zweistufigen Pfropfung wird in Gegenwart des in B1 erhaltenen Pfropfcopolymer-Latex zuerst ein vinylaromatisches Monomeres B21 polymerisiert. Beispiele für solche Monomere sind Styrol, α-Methylstyrol und kernalkylierte Styrole, wie p-Methylstyrol und tert.-Butylstyrol. Besonders bevorzugt werden Styrol, α-Methylstyrol und p-Methylstyrol eingesetzt. Es ist vorteilhaft, diese Pfropfmischpolymerisation der Monomeren B21 auf das als Pfropfgrundlage dienende vernetzte Polyacrylat wieder in wäßriger Emulsion unter den üblichen, vorstehend aufgeführten Bedingungen durchzuführen. Die Pfropfcopolymerisation kann zweckmäßigerweise im gleichen System erfolgen wie die Emulsionspolymerisation zur Herstellung der Pfropfgrundlage B1, wobei, falls notwendig, weiterer Emulgator und Initiator zugegeben werden kann. Das aufzupfropfende Monomere, insbesondere Styrol, kann dem Reaktionsgemisch auf einmal, absatzweise in mehreren Stufen oder kontinuierlich während der Polymerisation zugegeben werden. Die Pfropfcopolymerisation des Styrols in Gegenwart des vernetzten Acrylats wird so geführt, daß ein Pfropfgrad von 2,5 bis 30, vorzugsweise 10 bis 20 Gew.-% im Pfropfcopolymerisat B resultiert.

In einer zweiten Stufe wird dann die Pfropfcopolymerisation mit einem Monomerengemisch aus mindestens einem vinylaromatischen Monomeren B21 und mindestens einem copolymerisierbaren polaren Monomeren B22 im Verhältnis von 90:10 bis 60:40, vorzugsweise 75:25 bis 65:35 fortgeführt. Beispiele für vinylaromatische Monomere B21 sind bereits bei der ersten Pfropfstufe genannt. Beispiele für polare, copolymerisierbare Monomere B22 sind (Meth)acrylnitril, (Meth)acrylate mit 1 - 8 C-Atomen im Alkylrest, Acrylsäure, Maleinsäureanhydrid, Acrylamid, Vinylalkylether allein oder in Mischung. Besonders bevorzugte Monomeren-Gemische in der zweiten Stufe sind Styrol und Acrylnitril. Die Pfropfcopolymerisation von Styrol/Acrylnitril in Gegenwart des vernetzten Acrylats, gepfropft mit Styrol in der ersten Stufe wird so geführt, daß insgesamt ein Pfropfgrad von 10 bis 50, vorzugsweise 15 bis 45 Gew.-% im Pfropfcopolymerisat B resultiert.

Die erfindungsgemäßen Pfropfcopolymerisate A und B bilden eine sogenannte bimodale Teilchenmischung, d.h., eine dieser Komponenten ist kleinteilig, beispielsweise 50 bis 200 nm, bevorzugt 80 bis 180 nm, und die andere Komponente ist großteilig, also 300 bis 1500 nm, bevorzugt 350 bis 1000. Es ist erstrebenswert, wenn die großteilige Pfropfcopolymer-Komponente eine enge Teilchengrößenverteilung aufweist, d.h. daß der Quotient $Q = (d_{90}-d_{10})/d_{50}$ kleiner als 0,3, vorzugsweise kleiner als 0,2 ist, wegen der Definition von Q vgl. z.B. US-PS 4,634,734. Die Herstellung des als Pfropfgrundlage A1 verwendeten vernetzten Polystyrol-Polymerisats oder des als Pfropfgrundlage B1 verwendeten Acrylsäureester-Polymerisats, kann nach den bekannten Polymerisationsweisen zur Herstellung großteiliger Dispersionen vorgenommen werden, erfolgt jedoch zweckmäßigerweise nach der Saatlatex-Methode, wie sie beispielsweise in der DE-PS 19 11 882 für die Herstellung von ASA-Polymerisaten beschrieben ist.

Komponente C

Bevorzugte Copolymerisate gemäß Komponente C sind solche aus wenigstens einem Monomeren aus der Reihe Styrol, α-Methylstyrol, Alkylstyrol, Methylmethacrylat mit wenigstens einem Monomeren aus der

Reihe Acrylnitril, Methacrylnitril, Methylmethacrylat, Maleinsäureanhydrid.

Copolymerisate gemäß Komponente C entstehen häufig bei der Pfropfpolymerisation zur Herstellung der Komponenten A und B als Nebenprodukte, besonders dann, wenn große Mengen Monomere auf kleine Mengen Kautschuk gepfropft werden.

Die Copolymerisate gemäß Komponente C sind harzartig, thermoplastisch und kautschukfrei. Besonders bevorzugte Copolymerisate C sind solche aus Styrol mit Acrylnitril und gegebenenfalls mit Methylmethacrylat, aus α-Methylstyrol mit Acrylnitril und gegebenenfalls mit Methylmethacrylat oder aus Styrol und α-Methylstyrol mit Acrylnitril und gegebenenfalls mit Methlmethacrylat und aus Styrol und Maleinsäureanhydrid.

Besonders bevorzugte Gewichtsverhältnisse im thermoplastischen Copolymerisat C sind 60 bis 80 Gew.-% des vinylaromatischen und 40 bis 20 Gew.-% des ethylenisch ungesättigten Monomeren. Es können auch mehrere der beschriebenen Copolymeren gleichzeitig eingesetzt werden.

Die Copolymerisate gemäß Komponente C sind bekannt und lassen sich durch radikalische Polymerisation, insbesondere durch Emulsions-, Suspensions-, Lösungs- oder Massepolymerisation herstellen. Die Copolymerisate gemäß Komponente C weisen eine Viskositätszahl im Bereich von 40 bis 160, vorzugsweise von 60 bis 100 [ml/g] auf, dies entspricht einem Molekulargewicht $\overline{M}_w$ zwischen 15 000 und 200 000.

Komponente D

Erfindungsgemäß geeignete, thermoplastische, aromatische Polycarbonate D sind solche auf Basis der Diphenole der Formel (1)

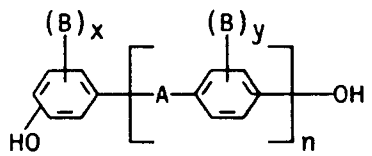

worin

A eine Einfachbindung, ein $C_1$-$C_5$-Alkylen, ein $C_2$-$C_5$-Alkyliden, ein $C_5$-$C_6$-Cycloalkyliden, -S- oder $-SO_2-$, B: Chlor, Brom, $C_1$-$C_8$-Alkyl, n = 1 oder 0 sowie x und y unabhängig voneinander 0, 1 oder 2 bedeuten.

Erfindungsgemäß geeignet als Polycarbonate D sind sowohl Homopolycarbonate als auch Copolycarbonate.

Die Diphenole der Formel (I) sind entweder literaturbekannt oder nach literaturbekannten Verfahren herstellbar.

Die Herstellung der Polycarbonate D ist bekannt und kann beispielsweise mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird (bezüglich polydiorganosiloxanhaltigen Polycarbonaten siehe DE-OS 33 34 782).

Geeignete Kettenabbrecher sind beispielsweise Phenol, p-Chlorphenol, p-tert.-Butylphenol oder 2,4,6-Tribromphenol, aber auch langkettige Alkylphenole wie 4-(1,3-Tetramethyl-butyl)-phenol, gemäß DE-OS 2 842 005 oder Monoalkylphenole oder Dialkylphenole mit insgesamt 8 bis 20 C-Atomen in den Alkylsubstituierten gemäß deutscher Patentanmeldung P 35 06 472.2 (Le A 23 654), wie beispielsweise p-Nonylphenyl, 3,5-di-tert.-Butylphenol, p-tert.-Octylphenol, p-Dodecylphenol, 2-Dodecylphenol, 2-(3,5-dimethylheptyl)-phenol und 4-(3,5-Dimethylheptyl)-phenol.

Die erfindungsgemäß geeignete Polycarbonate D haben ein GewichtsmittelMolekulargewicht ($\overline{M}_w$, gemessen beispielsweise durch Ultrazentrifugation oder Streulichtmessung) von 10 000 bis 200 000, vorzugsweise von 20 000 bis 80 000.

Geeignete Diphenole der Formel (I) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-3,5-dichlor-4-hydroxyphenyl)-propan und 2,2-Bis-(3,5-dibrom-4-hydroxyphenyl)-propan, 2,2-Bis-(3,5-dimethyl-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan, 2,2-Bis-(3,5-dimethyl-4-hydroxyphenyl-(propan und 1,1-Bis-(4-hydroxyphenyl)-cyclohexan.

Die Polycarbonate D können in bekannter Weise verzweigt sein, und zwar vorzugsweise durch den Einbau von 0,05 bis 2,0 Mol.%, bezogen auf die Summe der eingesetzten Diphenole, an drei- oder mehr als dreifunktionellen Verbindungen, beispielsweise solchen mit drei oder mehr als drei phenolischen OH-Gruppen.

Bevorzugte Polycarbonate sind neben dem Bisphenol A-Homopolycarbonat die Copolycarbonate von Bisphenol A mit bis zu 15 Mol%, bezogen auf die Molsumme an Diphenolen, an 2,2-Bis-(3,5-dibrom-4-hydroxyphenyl)-propan.

Die erfindungsgemäßen teilchenförmigen Pfropfpolymerisate können für sich allein als Formmassen verwendet werden. Hierzu können sie z.B. durch Sprühtrocknung aufgearbeitet werden. Bevorzugt werden die teilchenförmigen Pfropfpolymerisate jedoch zur Abmischung mit einem Thermoplasten verwendet, um dessen Schlagzähigkeit zu erhöhen. Zur Modifizierung geeignete Thermoplaste haben eine Glasübergangstemperatur über 25°C, bevorzugt über 60°C, besonders bevorzugt über 80°C. Sie werden im folgenden auch als Hartkomponente (Matrix) bezeichnet. Beispiele für geeignete Hartkomponenten sind Polyvinylchlorid, Polymethylmethacrylat sowie insbesondere Copolymere aus vinylaromatischen Monomeren und polaren, copolymerisierbaren, ethylenisch ungesättigten Monomeren. Geeignete vinylaromatische sowie polare, copolymerisierbare, ethylenisch ungesättigten Monomere sind auch hier die bei der Herstellung der Pfropfhülle als B1 und B2 genannt. Besonders bevorzugte Hartkomponenten sind Styrol-Acrylnitril- und α-Methylstyrol-Acrylnitril-Copolymere. Die Einarbeitung der erfindungsgemäßen teilchenförmigen Pfropfpolymerisate kann z.B. dadurch erfolgen, daß das teilchenförmige Pfropfpolymerisat durch Zugabe eines Elektrolyten aus der Emulsion isoliert wird und anschließend, gegebenenfalls nach Trocknung, durch gemeinsames Extrudieren, Kneten oder Walzen mit der Hartkomponente vermischt wird.

Die erfindungsgemäßen thermoplastischen Formmassen können als weitere Bestandteile Zusatzstoffe erhalten, wie sie für thermoplastische Formmassen üblich sind. Als solche seien beispielsweise genannt: Füllstoffe, weitere, verträgliche Kunststoffe, Antistatika, Antioxidantien, Flammschutzmittel, Schmiermittel, Farbstoffe und Pigmente. Die Zusatzstoffe werden in üblichen Mengen, vorzugsweise in Mengen von 0,1 bis 30 Gew.-%, bezogen auf das Gesamtgewicht der thermoplastischen Formmasse eingesetzt. Verträgliche Kunststoffe können auch einen höheren Anteil ausmachen.

Die erfindungsgemäßen Massen lassen sich nach den für die Thermoplastverarbeitung üblichen Verfahren, wie z.B. Extrusion und Spritzgießen, zu Formkörpern, wie z.B. Fensterprofilen, Gartenmöbeln, Booten, Schildern, Lampenabdeckungen, Automobilteilen und Kinderspielzeug verarbeiten. Die erfindungsgemäßen Massen eignen sich besonders zur Herstellung von Formkörpern, bei denen eine hohe Schlagzähigkeit bei hoher Witterungs- und Alterungsbeständigkeit gefordert ist.

Die nachstehend zur Kennzeichnung verwendeten Größen wurden wie folgt bestimmt:
Bei der Angabe der mittleren Teilchengröße handelt es sich in allen Fällen um das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Masseverteilung bezeichnet wird, ist dabei als der Wert definiert, bei dem 50 Gew.-% der Teilchen einen kleineren und 50 Gew.-% der Teilchen einen größeren Durchmesser als der $d_{50}$-Wert aufweisen.

Die Kerbschlagzähigkeit in [kJ/m$^2$] wurde nach DIN 53 453 an gespritzten Normkleinstäben bei 23°C gemessen. Untersucht wurden jeweils drei Probenserien. Die gefundenen Ergebnisse für die Beispiele sind in der Tabelle zusammengefaßt.

Die Viskositätszahlen in [cm$^3$/g] wurde an einer 0,5%igen Lösung bei 23°C in Dimethylformamid bestimmt. Unlösliche Gelanteile wurden vor der Messung durch Zentrifugieren entfernt und die Einwaage entsprechend korrigiert.

Die in den Beispielen verwendeten Mengenangaben beziehen sich, soweit nicht anders angegeben, auf das Gewicht.

## Beispiele

Zur Herstellung der Abmischungen wurde als Hartkomponente C ein Styrol/Acrylnitril-Copolymerisat mit einem Acrylnitril-Gehalt von 35 % und einer Viskositätszahl von 80 ml/g verwendet. Die gefällten und getrockneten Pfropfmischpolymerisate A und B wurden auf einem Extruder bei 260°C so mit der Hartkomponente abgemischt, daß das resultierende Gemisch einen Pfropfpolymerisatanteil von 50 % aufwies. Aus diesem Gemisch wurden durch Spritzguß Formteile hergestellt.

Die Pfropfgrade wurden folgendermaßen bestimmt:
Das Pfropfcopolymer wurde innerhalb von 24 Stunden bei 23 °C mit der 10fachen Menge an Toluol gerührt, und somit lösliche Anteile extrahiert. Der unlösliche Anteil wurde getrocknet. Aus der Differenz Einwaage (Pfropfcopolymer) und Auswaage (Toluol-unlöslicher Anteil) erhält man die löslichen Anteile. Geht man davon aus, daß die löslichen Anteile auf nichtgepfropfte Pfropfhüllenmonomere zurückzuführen sind (z.B. SAN), so errechnet sich unter Berücksichtigung des Verhältnisses Pfropfgrundlage: Pfropfhülle der Pfropfgrad. Der Pfropfgrad der Copolymeren betrug stets 96 bis 97,5 %.

Copolymer 1: Herstellung eines 4-stufigen Pfropfcopolymerisats A mit Polystyrol-Kern

1. Herstellung der Pfropfgrundlage A1

4200 g Wasser, 6 g des Na Salzes einer $C_{12}$- bis $C_{18}$-Paraffinsulfonsäure, 2 g Kaliumperoxodisulfat, 3 g Natriumhydrogencarbonat und 1,5 g Natriumpyrophosphat wurden unter Rühren auf 60 °C erwärmt. Ein Gemisch aus 588 g Styrol und 12 g Dicyclopentadienylacrylat wurde innerhalb von 3 Stunden zugegeben.
Feststoffgehalt: 12,7 %; pH: 8,1; Teilchendurchmesser $d_{50}$: 85 nm.

2. Herstellung der 1. Hülle A2-1

Zur unter 1. beschriebenen Emulsion wurden anschließend in der gleichen Ansatzapparatur 24 g des Na Salzes einer $C_{12}$- bis $C_{18}$-Paraffinsulfonsäure, 7,2 g Kaliumperoxodisulfat, 6 g Natriumhydrogencarbonat und 3 g Natriumpyrophosphat in 400 ml Wasser bei 60 °C innerhalb von 2,5 Stunden zugetropft. Gleichzeitig wurden 2400 g eines Gemisches aus 98 Teilen n-Butylacrylat und 2 Teilen Dicyclopentadienylacrylat innerhalb von 2,5 Stunden zugetropft. Es wurde 2 Stunden bei 60 °C nachgerührt.
Feststoffgehalt: 39,6 %; pH: 8,4; Teilchendurchmesser $d_{50}$: 150 nm.

3. Herstellung der 2. Hülle A2-2

4800 g der unter 2. erhaltenen Emulsion, 1900 g Wasser 6 g des Na Salzes einer $C_{12}$- bis $C_{18}$-Paraffinsulfonsäure und 5 g Kaliumperoxodisulfat werden unter Rühren auf 60 °C erwärmt. 420 g Styrol werden innerhalb von 1 Stunde zudosiert, bei 30 min. Nachrührzeit.
Feststoffgehalt: 32,7 %; pH: 8; Teilchendurchmesser $d_{50}$: 160 nm.

4. Herstellung der 3. Hülle A3

Zu der unter 3. erhaltenen Emulsion wurde anschließend in der gleichen Ansatzapparatur bei 60 °C ein Gemisch aus 650 g Styrol und 220 g Acrylnitril innerhalb von 2 Stunden unter Rühren zugetropft. Nach 2 Stunden Nachrührzeit ist die Reaktion beendet.
Feststoffgehalt: 39,8 %; pH 8,6; Teilchendurchmesser $d_{50}$ 180 nm

Copolymer 2: Herstellung eines 3-stufigen Pfropfcopolymerisats A mit Polystyrol-Kern

1. Herstellung der Pfropfgrundlage A1

4200 g Wasser, 6 g des Na Salzes einer $C_{12}$- bis $C_{18}$-Paraffinsulfonsäure, 2 g Kaliumperoxodisulfat, 3 g Natriumhydrogencarbonat und 1,5 g Natriumpyrophosphat wurden unter Rühren auf 60 °C erwärmt. Ein Gemisch aus 588 g Styrol und 12 g Dicyclopentadienylacrylat wurde innerhalb von 3 Stunden zugegeben.
Feststoffgehalt: 12,7 %; pH: 8,1; Teilchendurchmesser $d_{50}$: 85 nm.

2. Herstellung der 1. Hülle A2-1

Zur unter 1. beschriebenen Emulsion wurden anschließend in der gleichen Ansatzapparatur 24 g des Na Salzes einer $C_{12}$- bis $C_{18}$-Paraffinsulfonsäure, 7,2 g Kaliumperoxodisulfat, 6 g Natriumhydrogencarbonat und 3 g Natriumpyrophosphat in 400 ml Wasser bei 60 °C innerhalb von 2,5 Stunden zugetropft. Gleichzeitig wurden 2400 g eines Gemisches aus 98 Teilen n-Butylacrylat und 2 Teilen Dicyclopentadienylacrylat innerhalb von 2,5 Stunden zugetropft. Es wurde 2 Stunden bei 60 °C nachgerührt.
Feststoffgehalf; 39,6 %; pH 8,4; Teilchendurchmesser $d_{50}$: 150 nm.

3. Herstellung der 2. Hülle A2-2

4800 g der unter 2. erhaltenen Emulsion, 1900 g Wasser und 5 g Kaliumperoxodisulfat werden unter Rühren auf 65 ° C erwärmt. 960 g Styrol und 320 g Acrylnitril werden innerhalb von 1 Stunde zudosiert, bei 30 min. Nachrührzeit.
Feststoffgehalt: 39,7 %; pH 8,7; Teilchendurchmesser $d_{50}$ 178 nm.

Copolymer 3: Herstellung eines großteiligen Pfropfcopolymerisats B

1. Herstellung der Pfropfgrundlage B1

4400 g Wasser, 40 g eines feinteiligen n-Butylacrylat-Latex (40 % in Wasser) mit d(50) = 100 nm als Saatlatex, 9,2 g Kaliumperoxodisulfat, 9 g Natriumhydrogencarbonat und 4,5 g Natriumpyrophosphat wurden unter Rühren auf 60 ° C erwärmt. Ein Gemisch aus 2940 n-Butylacrylat und 60 g Dicyclopentadienylacrylat wurde neben einer Lösung von 18 g eines Na Salzes einer $C_{12}$- bis $C_{18}$-Paraffinsulfonsäure getrennt innerhalb von 3 Stunden zugegeben.
Feststoffgehalt: 40,7 %; pH 8,5; Teilchendurchmesser $d_{50}$: 450 nm.

2. Herstellung der Hülle B2

4900 g der unter 2. erhaltenen Emulsion, 1900 g Wasser, 7 g eines Na Salzes einer $C_{12}$- bis $C_{18}$-Paraffinsulfonsäure und 5 g Kaliumperoxodisulfat werden unter Rühren auf 65 ° C erwärmt. 400 g Styrol werden innerhalb einer Stunde und ein Gemisch aus 650 g Styrol und 220 g Acrylnitril werden innerhalb von 2 Stunden zudosiert, bei 30 min. Nachrührzeit.
Feststoffgehalt: 40,5 %; pH 8,7; Teilchendurchmesser $d_{50}$: 510 nm.

Tabelle: Copolymere in Poly[styrol-co-acrylnitril]

$$\frac{\text{Summe der Copolymeren [Gew.-\%]}}{\text{Poly(styrol-co-acrylnitril) [Gew.-\%]}} = \frac{1}{1}$$

| Versuch Nr. | Copolymer (Gew.-%) 1 | 2 | 3 | Kerbschlagzähigkeit (220/25) | $a_K$ (250/25) | [kJ/m²][1] (280/25) | Einfärbbarkeit[2] |
|---|---|---|---|---|---|---|---|
| V-1 | 100 | - | - | 30,4 | 31,5 | 31,5 | 2 |
| V-2 | - | 100 | - | 19,7 | 28,3 | 30,9 | 2 |
| V-3 | - | - | 100 | 26,9 | 20,3 | 17,0 | 3 |
| 1 | 70 | - | 30 | 33,6 | 32,8 | 32,8 | 1 - |
| 2 | - | 70 | 30 | 30,1 | 32,1 | 31,8 | 1 - |

1) Kerbschlagzähigkeit $a_K$ bei (Verarbeitungstemperatur/Prüftemperatur)

2) Optische Beurteilung v. Rundschreiben der Formmassen, die mit 1 % Cadmiumsulfid eingefärbt wurden (1 = brillant, 2 = weniger brillant, 3 = keine Brillanz

## Patentansprüche

1. Mischung aus
   A. einem teilchenförmigen Pfropfcopolymerisat A, das gebildet wird aus - in der Reihenfolge A1 bis A3 von innen nach außen - einem Kern und mehreren Schalen, nämlich

A1: 90 bis 5 Gew.-% (bezogen auf A1 + A2-1 + A2-2) eines Kerns mit einer Glasübergangstemperatur $T_g$ oberhalb von 25 ° C, aus:

A11: 50 bis 99,9 Gew.-% mindestens eines vinylaromatischen Monomeren A11;

A12: 0,1 bis 10 Gew.-% mindestens eines polyfunktionellen, vernetzend wirkenden Monomeren und/oder eines pfropfaktiven Monomeren mit zwei- oder mehrfunktionellen Gruppen unterschiedlicher Reaktivität, wobei vernetzende und pfropfaktive Wirkung auf ein einziges Monomer zutreffen können (A12);

A13: bis 49,9 Gew.-% eines oder mehrerer copolymerisierbarer Monomerer A13;

A2-1:5 bis 90 Gew.-% (bezogen auf A1 + A2-1 + A2-2) einer ersten Hülle A2-1 aus einem kautschukartigen Copolymeren A2-1 mit einer Glasübergangstemperatur $T_g$ von unter 25 ° C, aus:

A21-1: 50 bis 99,9 Gew.-% mindestens eines Alkylacrylates A21-1 mit 1 bis 18 C-Atomen im Alkylrest;

A22-1: 0,1 bis 10 Gew.-% mindestens eines polyfunktionellen, vernetzend wirkenden Monomeren und/oder mindestens eines pfropfaktiven Monomeren mit zwei oder mehr funktionellen Gruppen unterschiedlicher Reaktivität, wobei vernetzende und pfropfaktive Wirkung auf ein einziges Monomer zutreffen können (A22-1);

A23-1: bis 49,9 Gew.-% eines oder mehrerer copolymerisierbarer Monomerer A23-1;

A2-2:5 bis 90 Gew.-% (bezogen auf A1 + A2-1 + A2-2) einer zweiten Hülle mit einer Glasübergangstemperatur $T_g$ oberhalb von 25 ° C aus einem kautschukartigen Copolymeren A2-2 aus

A21-2: 1 bis 99 Gew.-% eines oder mehrerer vinylaromatischer Monomerer A21-2;

A22-2: 1 bis 99 Gew.-% eines oder mehrerer copolymerisierbarer Monomerer A22-2;

A23-2: bis 10 Gew.-% mindestens eines polyfunktionellen, vernetzend wirkenden Monomeren und/oder mindestens eines pfropfaktiven Monomeren A23-2 mit zwei oder mehr funktionellen Gruppen unterschiedlicher Reaktivität, wobei vernetzende und pfropfaktive Wirkung auf ein einziges Monomer zutreffen können,

wobei der mittlere Teilchendurchmesser ($d_{50}$-Wert) des Pfropfcopolymerisats A 50 bis 200 nm beträgt;

und

B: einem zweiten Pfropfcopolymerisat B aus

B1: 40 bis 90 Gew.-% eines kautschukartigen Materials B1 einer Glasübergangstemperatur $T_g$ von unter 25 ° C, bestehend aus:

B11: 50 bis 99,9 Gew.-% mindestens eines Alkylacrylates B11 mit 1 bis 18 C-Atomen im Alkylrest;

B12: 0,1 bis 10 Gew.-% mindestens eines polyfunktionellen, vernetzend wirkenden Monomeren und/oder mindestens eines pfropfaktiven Monomeren mit zwei oder mehr funktionellen Gruppen unterschiedlicher Reaktivität, wobei vernetzende und pfropfaktive Wirkung auf ein einziges Monomer zutreffen können (B12);

B13: bis 40 Gew.-% eines oder mehrerer copolymerisierbarer ungesättigter Monomerer B13;

B2: 10 bis 50 Gew.-% einer oder mehrerer Hüllen B2 aus

B21: 60 bis 90 Gew.-% eines oder mehrerer vinylaromatischer Monomerer B21;

B22: 10 bis 40 Gew.-% (Meth)acrylnitril B22;

B23: 0 bis 30 Gew.-% eines oder mehrerer copolymerisierbarer, ungesättigter Monomerer B23,

wobei der mittlere Teilchendurchmesser ($d_{50}$-Wert) des Pfropfcopolymerisates B 300 bis 1500 nm beträgt;

C: einer Hartkomponente C aus einem oder mehreren Copolymerisaten von

C1: 50 bis 100 Gew.-% Styrol, $\alpha$-Methylstyrol, kernsubstituiertem Styrol, Alkyl(meth)acrylat mit 1 bis 18 C-Atomen im Alkylrest oder Mischungen daraus (C1);

C2: bis zu 50 Gew.-% (Meth)acrylnitril, Maleinsäureanhydrid, N-substituierte Maleinimide, $C_1$-$C_{18}$-Alkyl(meth)acrylat oder Mischungen daraus (C2);

D: bis zu 90 Gew.-%, bezogen auf die Summe von A bis D, mindestens eines Polycarbonats D,

E: bis zu 50 Gew.-%, bezogen auf die Summe von A bis E, übliche Zusatzstoffe.

**2.** Mischung nach Anspruch 1, enthaltend ein Pfropfcopolymerisat A mit einem mittleren Teilchendurchmesser ($d_{50}$) von 300 bis 1500 nm, und gleichzeitig ein Pfropfcopolymerisat B mit einem mittleren Teilchendurchmesser ($d_{50}$) von 50 bis 200 nm.

3. Mischung nach Anspruch 1, enthaltend ein Pfropfcopolymerisat A, bestehend aus - in der Reihenfolge A1 bis A3 von innen nach außen und bezogen auf die Summe aus A1 bis A3 - folgenden Schalen:
   A1: 5 bis 85 Gew.-% eines Kerns A1 mit einer Glasübergangstemperatur $T_g$ oberhalb von 25 ° C, aus
      A11: 50 bis 99,9 Gew.-% mindestens eines vinylaromatischen Monomeren,
      A12: 0,1 bis 10 Gew.-% mindestens eines polyfunktionellen, vernetzend wirkenden Monomeren und/oder eines pfropfaktiv wirkenden Monomeren mit zwei oder mehr funktionellen Gruppen unterschiedlicher Reaktivität, wobei vernetzende und pfropfaktive Wirkung auf ein einziges Monomer zutreffen können und
      A13: bis 49,9 Gew.-% eines oder mehrerer copolymerisierbarer Monomerer;
   A2-1:5 bis 85 Gew.-% einer ersten Hülle aus einem kautschukelastischen Copolymeren A2-1 mit einer Glastemperatur $T_g$ unterhalb von 25 ° C, nämlich
      A21-1: 50 bis 99,9 Gew.-% mindestens eines Alkylacrylates A21-1 mit 4 bis 18 C-Atomen im Alkylrest
      A22-1: 0,1 bis 10 Gew.-% mindestens eines polyfunktionellen, vernetzend wirkenden Monomeren und/oder mindestens eines pfropfaktiven Monomeren mit zwei oder mehr funktionellen Gruppen unterschiedlicher Reaktivität (A22-1), wobei vernetzende und pfropfaktive Wirkung auf ein einziges Monomer zutreffen können;
      A23-1: bis 40 Gew.-% eines oder mehrerer copolymerisierbarer ungesättigter Monomerer A23-1;
   A2-2:5 bis 85 Gew.-% einer zweiten Hülle A2-2 aus vinylaromatischen Monomer(en) mit einer Glasübergangstemperatur $T_g$ von unter 25 ° C, nämlich
      A21-2: 50 bis 100 Gew.-% mindestens eines vinylaromatischen Monomeren A21-2;
      A22-2: 0 bis 10 Gew.-% mindestens eines polyfunktionellen, vernetzend wirkenden Monomeren und/oder mindestens eines pfropfaktiven Monomeren mit zwei oder mehr funktionellen Gruppen unterschiedlicher Reaktivität (A22-2);
      A23-2 bis 50 Gew.-% eines oder mehrerer copolymerisierbarer Monomerer A23-2;
   A3: 5 bis 85 Gew.-% (bezogen auf A1 + A2-1 + A2-2 + A3) einer dritten Hülle aus einem Copolymeren aus
      A31: 1 bis 99 Gew.-% eines oder mehrerer vinylaromatischer Monomerer (A31);
      A32: 1 bis 99 Gew.-% eines oder mehrerer copolymerisierbarer Monomerer (A32);
   mit einem mittleren Teilchendurchmesser ($d_{50}$-Wert) des Pfropfcopolymerisates A von 50 bis 200 nm und einem zweiten Pfropfcopolymerisat B mit einem mittleren Teilchendurchmesser ($d_{50}$-Wert) von 300 bis 1500 nm

4. Mischung nach Anspruch 3, enthaltend ein Pfropfcopolymerisat A mit einem mittleren Teilchendurchmesser ($d_{50}$) von 300 bis 1500 nm und ein Pfropfcopolymerisat B mit einem mittleren Teilchendurchmesser ($d_{50}$) von 50 bis 200 nm.

## Claims

1. A mixture of
   A. a particulate graft copolymer A which is formed of a core and a plurality of shells, namely, in the sequence A1 to A3 from the inside to the outside,
      A1: from 90 to 5% by weight (based on A1 + A2-1 + A2-2) of a core with a glass transition temperature $T_g$ above 25 ° C composed of:
         A11: from 50 to 99.9% by weight of at least one vinylaromatic monomer A11;
         A12: from 0.1 to 10% by weight of at least one polyfunctional crosslinking monomer and/or of a grafting monomer with two or more functional groups of different reactivity, it being possible for crosslinking and grafting effects to relate to a single monomer (A12);
         A13: up to 49.9% by weight of one or more copolymerizable monomers A13;
      A2-1:from 5 to 90% by weight (based on A1 + A2-1 + A2-2) of a first shell A2-1 composed of a rubber-like copolymer A2-1 with a glass transition temperature $T_g$ below 25 ° C composed of:
         A21-1: from 50 to 99.9% by weight of at least one $C_1$-$C_{18}$-alkyl acrylate A21-1;
         A22-1: from 0.1 to 10% by weight of at least one polyfunctional crosslinking monomer and/or at least one grafting monomer with two or more functional groups of different reactivity, it being possible for crosslinking and grafting effects to relate to a single monomer (A22-1);
         A23-1: up to 49.9% by weight of one or more copolymerizable monomers A23-1;
      A2-2:from 5 to 90% by weight (based on A1 + A2-1 + A2-2 ) of a second shell with a glass transition temperature $T_g$ above 25 ° C, composed of a rubber-like copolymer A2-2 composed of

A21-2: from 1 to 99% by weight of one or more vinylaromatic monomers A21-2;
A22-2: from 1 to 99% by weight of one or more copolymerizable monomers A22-2;
A23-2: up to 10% by weight of at least one polyfunctional crosslinking monomer and/or at least one grafting monomer A23-2 with two or more functional groups of different reactivity, it being possible for crosslinking and grafting effects to relate to a single monomer,

where the median particle diameter ($d_{50}$) of the graft copolymer A is from 50 to 200 nm; and

B. a second graft copolymer B composed of

B1: from 40 to 90% by weight of a rubber-like material B1 with a glass transition temperature $T_g$ below 25°C, composed of:

B11: from 50 to 99.9% by weight of at least one $C_1$-$C_{18}$-alkyl acrylate B11;
B12: from 0.1 to 10% by weight of at least one polyfunctional crosslinking monomer and/or at least one grafting monomer with two or more functional groups of different reactivity, it being possible for crosslinking and grafting effects to relate to a single monomer (B12);
B13: up to 40% by weight of one or more copolymerizable unsaturated monomers B13;

B2: from 10 to 50% by weight of one or more shells B2 composed of

B21: from 60 to 90% by weight of one or more vinyl-aromatic monomers B21;
B22: from 10 to 40% by weight of (meth)acrylonitrile B22;
B23: from 0 to 30% by weight of one or more copolymerizable unsaturated monomers B23,

where the median particle diameter ($d_{50}$) of the graft copolymer B is from 300 to 1500 nm;

C: a hard component C composed of one or more copolymers of

C1: from 50 to 100% by weight of styrene, $\alpha$-methylstyrene, nuclear-substituted styrene, $C_1$-$C_{18}$-alkyl (meth)acrylate or mixtures thereof (C1);
C2: up to 50% by weight of (meth)acrylonitrile, maleic anhydride, N-substituted maleimides, $C_1$-$C_{18}$-alkyl (meth)acrylate or mixtures thereof (C2);

D: up to 90% by weight, based on the total of A to D, of at least one polycarbonate D,
E: up to 50% by weight, based on the total of A to E, of conventional additives.

**2.** A mixture as claimed in claim 1, containing a graft copolymer A with a median particle diameter ($d_{50}$) of from 300 to 1500 nm and, at the same time, a graft copolymer B with a median particle diameter ($d_{50}$) of from 50 to 200 nm.

**3.** A mixture as claimed in claim 1, containing a graft copolymer A composed of the following shells, in the sequence A1 to A3 from the inside to the outside, and based on the total of A1 to A3:

A1: from 5 to 85% by weight of a core A1 with a glass transition temperature $T_g$ above 25°C, composed of

A11: from 50 to 99.9% by weight of at least one vinylaromatic monomer,
A12: from 0.1 to 10% by weight of at least one polyfunctional crosslinking monomer and/or of a grafting monomer with two or more functional groups of different reactivity, it being possible for crosslinking and grafting effects to relate to a single monomer and
A13: up to 49.9% by weight of one or more copolymerizable monomers;

A2-1:from 5 to 85% by weight of a first shell composed of a rubber-elastic copolymer A2-1 with a glass transition temperature $T_g$ below 25°C, namely

A21-1: from 50 to 99.9% by weight of at least one $C_4$-$C_{18}$-alkyl acrylate A21-1
A22-1: from 0.1 to 10% by weight of at least one polyfunctional crosslinking monomer and/or at least one grafting monomer with two or more functional groups of different reactivity (A22-1), it being possible for crosslinking and grafting effects to relate to a single monomer;
A23-1: up to 40% by weight of one or more copolymerizable unsaturated monomers A23-1;

A2-2: from 5 to 85% by weight of a second shell A2-2 composed of vinylaromatic monomer(s) with a glass transition temperature $T_g$ below 25°C, namely

A21-2: from 50 to 100% by weight of at least one vinylaromatic monomer A21-2;
A22-2: from 0 to 10% by weight of at least one polyfunctional crosslinking monomer and/or at least one grafting monomer with two or more functional groups of different reactivity (A22-2);
A23-2: up to 50% by weight of one or more copolymerizable monomers A23-2;

A3: from 5 to 85% by weight (based on A1 + A2-1 + A2-2 + A3) of a third shell composed of a copolymer of

A31: from 1 to 99% by weight of one or more vinyl-aromatic monomers (A31);

A32: from 1 to 99% by weight of one or more copolymerizable monomers (A32);
with a median particle diameter ($d_{50}$) of the graft copolymer A of from 50 to 200 nm, and a second graft copolymer B with a median particle diameter ($d_{50}$) of from 300 to 1500 nm.

**4.** A mixture as claimed in claim 3, containing a graft copolymer A with a median particle diameter ($d_{50}$) of from 300 to 1500 nm and a graft copolymer B with a median particle diameter ($d_{50}$) of from 50 to 200 nm.

**Revendications**

**1.** Composition constituée de
A : un copolymère greffé A particulaire, qui est formé - dans l'ordre A1 à A3 de l'intérieur vers l'extérieur - d'un noyau et de plusieurs enveloppes, en l'occurrence
A1 : 90 à 5 % en poids (par rapport à A1 + A2-1 + A2-2) d'un noyau avec une température de transition vitreuse $T_g$ supérieure à 25 °C, constitué de :
A11 : 50 à 99,9 % en poids d'au moins un monomère vinylaromatique A11;
A12 : 0,1 à 10 % en poids d'au moins un monomère polyfonctionnel à action réticulante et/ou un monomère actif d'un point de vue du greffage avec des groupes à deux ou plusieurs fonctions de réactivité différente, l'effet réticulant et l'activité d'un point de vue du greffage pouvant valoir pour un seul monomère (A12);
A13 : jusqu'à 49,9 % en poids d'un ou de plusieurs monomères copolymérisables A13;
A2-1 : 5 à 90 % en poids (par rapport à A1 + A2-1 + A2-2) d'une première enveloppe A2-1 constituée d'un copolymère caoutchouteux A2-1 avec une température de transition vitreuse $T_g$ inférieure à 25 °C, constituée de :
A21-1 : 50 à 99,9 % en poids d'au moins un acrylate d'alkyle A21-1 avec 1 à 18 atomes de carbone dans le résidu alkyle;
A22-1 : 0,1 à 10 % en poids d'au moins un monomère polyfonctionnel à action réticulante et/ou au moins un monomère actif d'un point de vue du greffage avec deux ou plusieurs groupes fonctionnels de réactivité différente, l'effet réticulant et l'activité d'un point de vue du greffage pouvant valoir pour un seul monomère (A22-1);
A23-1 : jusqu'à 49,9 % en poids d'un ou de plusieurs monomères copolymérisables A23-1;
A2-2 : 5 à 90 % en poids (par rapport à A1 + A2-1 + A2-2) d'une deuxième enveloppe avec une température de transition vitreuse $T_g$ supérieure à 25 °C, constituée d'un copolymère caoutchouteux A2-2, constitué de
A21-2 : 1 à 99 % en poids d'un ou de plusieurs monomères vinylaromatiques A21-2;
A22-2 : 1 à 99 % en poids d'un ou de plusieurs monomères copolymérisables A22-2;
A23-2 : jusqu'à 10 % en poids d'au moins un monomère polyfonctionnel à action réticulante et/ou au moins un monomère A23-2 actif d'un point de vue du greffage avec deux ou plusieurs groupes fonctionnels de réactivité différente, l'effet réticulant et l'activité d'un point de vue du greffage pouvant valoir pour un seul monomère,
la granulométrie moyenne (valeur $d_{50}$) du copolymère greffé A s'élevant à 50 à 200 nm;
et
B : un deuxième copolymère greffé B constitué de
B1 : 40 à 90 % en poids d'un matériau caoutchouteux B1 avec une température de transition vitreuse $T_g$ inférieure à 25 °C, constitué de :
B11 : 50 à 99,9 % en poids d'au moins un acrylate d'alkyle B11 avec 1 à 18 atomes de carbone dans le résidu alkyle;
B12 : 0,1 à 10 % en poids d'au moins un monomère polyfonctionnel à action réticulante et/ou au moins un monomère actif d'un point de vue du greffage avec deux ou plusieurs groupes fonctionnels de réactivité différente, l'effet réticulant et l'activité d'un point de vue du greffage pouvant valoir pour un seul monomère (B12);
B13 : jusqu'à 40 % en poids d'un ou de plusieurs monomères insaturés copolymérisables B13;
B2 : 10 à 50 % en poids d'une ou de plusieurs enveloppes B2, constituées de
B21 : 60 à 90 % en poids d'un ou de plusieurs monomères vinylaromatiques B21;
B22 : 10 à 40 % en poids de (méth)acrylonitrile B22;
B23 : 0 à 30 % en poids d'un ou de plusieurs monomères insaturés copolymérisables B23,
la granulométrie moyenne (valeur $d_{50}$) du copolymère greffé B s'élevant à 300 à 1.500 nm;

C : un composant rigide C constitué d'un ou de plusieurs copolymères de

C1 : 50 à 100 % en poids de styrène, d'α-méthylstyrène, de styrène substitué sur le noyau, de (méth)acrylate d'alkyle avec 1 à 18 atomes de carbone dans le résidu alkyle ou de mélanges de ceux-ci (C1);

C2 : jusqu'à 50 % en poids de (méth)acrylonitrile, d'anhydride de l'acide maléique, de maléinimide N-substituée, de (méth)acrylate d'alkyle en $C_1$-$C_{18}$ ou de mélanges de ceux-ci (C2);

D : jusqu'à 90 % en poids, par rapport à la somme de A à D, d'au moins un polycarbonate D,

E : jusqu'à 50 % en poids, par rapport à la somme de A à E, d'additifs courants.

**2.** Composition selon la revendication 1, contenant un copolymère greffé A avec une granulométrie moyenne ($d_{50}$) de 300 à 1.500 nm, et en même temps un copolymère greffé B avec une granulométrie moyenne ($d_{50}$) de 50 à 200 nm.

**3.** Composition selon la revendication 1, contenant un copolymère greffé A, constitué - dans l'ordre A1 à A3 de l'intérieur vers l'extérieur et par rapport à la somme de A1 à A3 - des enveloppes suivantes :

A1 : 5 à 85 % en poids d'un noyau A1 avec une température de transition vitreuse $T_g$ supérieure à 25 °C, constitué de

A11 : 50 à 99,9 % en poids d'au moins un monomère vinylaromatique;

A12 : 0,1 à 10 % en poids d'au moins un monomère polyfonctionnel à action réticulante et/ou un monomère actif d'un point de vue du greffage avec deux ou plusieurs groupes fonctionnels de réactivité différente, l'effet réticulant et l'activité d'un point de vue du greffage pouvant valoir pour un seul monomère et

A13 : jusqu'à 49,9 % en poids d'un ou de plusieurs monomères copolymérisables;

A2-1 : 5 à 85 % en poids d'une première enveloppe constituée d'un copolymère caoutchouteux A2-1 avec une température de transition vitreuse $T_g$ inférieure à 25 °C, en l'occurrence

A21-1 : 50 à 99,9 % en poids d'au moins un acrylate d'alkyle A21-1 avec 4 à 18 atomes de carbone dans le résidu alkyle;

A22-1 : 0,1 à 10 % en poids d'au moins un monomère polyfonctionnel à action réticulante et/ou au moins un monomère actif d'un point de vue du greffage avec deux ou plusieurs groupes fonctionnels de réactivité différente (A22-1), l'effet réticulant et l'activité d'un point de vue du greffage pouvant valoir pour un seul monomère;

A23-1 : jusqu'à 40 % en poids d'un ou de plusieurs monomères insaturés copolymérisables A23-1;

A2-2 : 5 à 85 % en poids d'une deuxième enveloppe A2-2 constituée de monomère(s) vinylaromatique(s) avec une température de transition vitreuse $T_g$ inférieure à 25 °C, en l'occurrence

A21-2 : 50 à 100 % en poids d'au moins un monomère vinylaromatique A21-2;

A22-2 : 0 à 10 % en poids d'au moins un monomère polyfonctionnel à action réticulante et/ou au moins un monomère actif d'un point de vue du greffage avec deux ou plusieurs groupes fonctionnels de réactivité différente (A22-2);

A23-2 : jusqu'à 50 % en poids d'un ou de plusieurs monomères copolymérisables A23-2;

A3 : 5 à 85 % en poids (par rapport à A1 + A2-1 + A2-2 + A3) d'une troisième enveloppe d'un copolymère constitué de

A31 : 1 à 99 % en poids d'un ou de plusieurs monomères vinylaromatiques (A31);

A32 : 1 à 99 % en poids d'un ou de plusieurs monomères copolymérisables (A32); avec une granulométrie moyenne (valeur $d_{50}$) du copolymère greffé A de 50 à 200 nm et un deuxième copolymère greffé B avec une granulométrie moyenne (valeur $d_{50}$) de 300 à 1.500 nm.

**4.** Composition selon la revendication 3, contenant un copolymère greffé A avec une granulométrie moyenne ($d_{50}$) de 300 à 1.500 nm, et un copolymère greffé B avec une granulométrie moyenne ($d_{50}$) de 50 à 200 nm.